Europäisches Patentamt

European Patent Office

Office européen des brevets

(11) Veröffentlichungsnummer: **0 477 529 A1**

## EUROPÄISCHE PATENTANMELDUNG

(21) Anmeldenummer: **91113824.6**

(51) Int. Cl.5: **A01M 29/02**

(22) Anmeldetag: **17.08.91**

(30) Priorität: **24.09.90 DE 9013441 U**

(43) Veröffentlichungstag der Anmeldung:
**01.04.92 Patentblatt 92/14**

(84) Benannte Vertragsstaaten:
**AT CH DE ES FR IT LI SE**

(71) Anmelder: **ISOTRONIC DIETER MEZGER
Benz- und Etzwiesenstrasse
W-7407 Rottenburg 3(DE)**

(72) Erfinder: **Mezger, Dieter
Gartenstrasse 38
W-7000 Stuttgart 80(DE)**

(74) Vertreter: **Jochem, Bernd, Dipl.-Wirtsch.-Ing.
Patentanwälte Beyer & Jochem Postfach 17
01 45 Staufenstrasse 36
W-6000 Frankfurt/Main 1(DE)**

(54) **Vorrichtung zum Fernhalten und Vertreiben von Tieren und Insekfen.**

(57) Die Vorrichtung dient zum Fernhalten und Vertreiben von Tieren, insbesondere Kleintieren, und Insekten mit einem elektrischen Schallerzeuger. Um einen weiten Einsatzbereich zum Vertreiben möglichst vieler Tier- und Insektenarten zu erhalten, ist eine Widerstandsschaltung (30) für den elektrischen Schallerzeuger (28) vorgesehen, die entweder einen stufenlos einstellbaren Widerstand oder wenigstens zwei wahlweise einstellbare Widerstände (34, 36) aufweist. Bei drei Widerständen (32, 34, 36) kann z. B. ein Frequenzbereich des elektrischen Schallerzeugers von etwa 7, 10 und 12 kHz einstellbar sein.

Fig. 1

EP 0 477 529 A1

Die Erfindung bezieht sich auf eine Vorrichtung zum Fernhalten und Vertreiben von Tieren, insbesondere Kleintieren, und Insekten mit einem elektrischen Schallerzeuger.

Zum Vertreiben und Fernhalten von Kleintieren und Insekten ist es bekannt, Geräte mit einem Schallerzeuger zu verwenden, der einen Dauerton mit einer hohen Frequenz erzeugt. Diese Frequenz kann von dem menschlichen Ohr kaum oder nicht mehr wahrgenommen werden. Es hat sich allerdings gezeigt, daß derartige Frequenzen abschreckend auf Kleintiere und Insekten wirken, so daß diese Tiere und Insekten bei Verwendung eines derartigen Gerätes ferngehalten werden können.

Aus dem DE-GM 90 01 153 ist ein Gerät mit elektrischem Schallerzeuger zum Vertreiben von Mäusen bekannt. Dieses Gerät arbeitet in einem Frequenzbereich zwischen etwa 7,5 und 8,5 kHz, wobei es einen an- und abschwellend schwingenden elektrischen Schallerzeuger enthält.

Aus dem DE-GM 90 01 151 ist ein Gerät zum Fernhalten von Mardern von Kraftfahrzeugen bekannt. Dieses Gerät besteht aus einem an eine Kraftfahrzeugbatterie anschließbaren, mit mehr als 10 kHz schwingenden Schallerzeuger, der spritzwassergeschützt in einem mit Befestigungsmitteln versehenen Gehäuse eingekapselt ist. Bei diesem Gerät ist vorgesehen, daß die Schallerzeugung nach einer bestimmten Dauer intervallweise zu unterbrechen.

Der Nachteil der bekannten Geräte liegt darin, daß diese jeweils nur für eine bestimmte Tierart geeignet sind. So ist es beispielsweise unmöglich, mit dem einen Gerät Marder fernzuhalten, während es mit dem anderen Gerät nicht möglich ist, Mäuse abzuschrecken.

Aufgabe der Erfindung ist es, eine Vorrichtung der eingangs genannten Art zur Verfügung zu stellen, die einen großen, möglichst universellen Einsatzbereich zum Vertreiben und Fernhalten von möglichst sämtlichen Tier- und Insektenarten gewährleistet. Diese Aufgabe wird erfindungsgemäß im wesentlichen durch eine Widerstandsschaltung für den elektrischen Schallerzeuger mit einem stufenlos einstellbaren Widerstand gelöst. Der Vorteil der erfindungsgemäßen Vorrichtung liegt darin, daß je nach Tier- bzw. Insektenart die Frequenz entsprechend eingestellt werden kann. Dies ist insbesondere im Ausland von großer Wichtigkeit, da dort Insekten und Tiere vorkommen, bei denen noch nicht genau untersucht wurde, welche Frequenz abschreckend wirkt. Zum Gebrauch im Ausland ist es dem Benutzer in einfacher Weise möglich, durch Verstellen des stufenlos regelbaren Widerstandes die entsprechende Frequenz für das störende Tier oder Insekt herauszufinden.

Eine andere erfindungsgemäße Vorrichtung sieht eine Widerstandsschaltung für den elektrischen Schallerzeuger mit wenigstens zwei wahlweise einstellbaren Widerständen vor. Der Vorteil dieser Vorrichtung liegt darin, daß hierbei verschiedene vorgebene Frequenzen durch die Widerstände vorgegeben sein können, wobei es jeweils zweckmäßig ist, derartige Widerstände einzubauen, die eine Frequenz erzeugen, die abschreckend auf einen möglichst weiten Bereich von Tieren oder Insekten wirkt.

In einer besonderen Ausgestaltung dieses Erfindungsgedankens ist vorgesehen, daß die Widerstandsschaltung drei wahlweise einstellbare Widerstände aufweist, mit denen ein Frequenzbereich des elektrischen Schallerzeugers von etwa 7, 10 und 12 kHz einstellbar ist. Es hat sich gezeigt, daß die Frequenz von etwa 7 kHz besonders abschreckend auf Stechmücken wirkt, während die Frequenz von 10 kHz eine entsprechende Wirkung auf Mäuse, Ratten und Kakerlaken zeigt. Die Frequenz von 12 kHz ist sehr wirksam gegen Marder und andere entsprechende Kleintiere. Je nach Bedarf ist es dem Benutzer in einfacher Weise möglich, den jeweils geeigneten Frequenzbereich durch Wahl des vorgesehenen Widerstandes sofort zu bestimmen.

Zweckmäßigerweise hat die Widerstandsschaltung eine Nullstellung mit unendlich großem Widerstand. Dies ermöglicht ein schnelles Ein- und Ausschalten der erfindungsgemäßen Vorrichtung, so daß die Vorrichtung nicht ständig bei einer bestimmten Frequenz betrieben werden muß.

Nach einem anderen Erfindungsgedanken ist die Vorrichtung mit einem wenigstens zweiteilig ausgebildeten Gehäuse mit Gehäusegrundkörper und Gehäusedeckplatte versehen, die über eine Rastverbindung lösbar befestigbar sind. Ein derartiges Gehäuse ist nach Einbau der entsprechenden Schaltung und des Schallerzeugers leicht zusammenzusetzen und kann bei Störungen in einfacher Weise geöffnet werden.

Hierbei ist vorteilhafterweise vorgesehen, daß das Gehäuse aus Kunststoff besteht. Ein derartiges Gehäuse ist einfach herzustellen und gleichzeitig sehr preisgünstig, was sich entsprechend auf die Kosten der erfindungsgemäßen Vorrichtung auswirkt.

Nach einem weiteren Erfindungsgedanken ist am Gehäuse ein Stecker zum Anschluß an ein Stromnetz, vorzugsweise ohne Kabel ausgebildet. Hierdurch kann die erfindungsgemäße Vorrichtung ständig in einer Steckdose verbleiben und wird je nach Bedarf ein- und ausgeschaltet.

Zur Vermeidung der Gewöhnung der Tiere und Insekten an den Ton mit der eingestellten Frequenz ist die erfindungsgemäße Vorrichtung mit einer Schaltung zur Erzeugung eines Schallsignals mit Pausenintervallen versehen.

Weiterhin kann vorgesehen sein, daß die erfindungsgemäße Vorrichtung eine Schaltung zur Erzeugung eines in der Lautstärke und/oder Frequenz ab- und anschwellenden Schallsignals aufweist. Hiermit wird z. B. erreicht, daß die Vorrichtung nicht nur mit der eingestellten Grundfrequenz beispielsweise von 7, 10 und 12 kHz schwingt, sondern verschiedene Bereiche abdeckt, so daß während des Betriebes auch andere Tiere und Insekten verscheucht werden. Hierbei kann vorgesehen sein, daß bei einer eingestellten Grundfrequenz von 7 kHz der Schwingungsbereich zwischen 6 und 8 kHz liegt, während bei eingestellten 10 kHz der Bereich zwischen 9 und 11 kHz liegen kann. Entsprechendes gilt für die eingestellte Frequenz von 12 kHz, wobei der Schwingungsbereich zwischen 11 und 13 kHz liegen kann.

Weitere Ziele, Merkmale, Vorteile und Anwendungsmöglichkeiten der Erfindung ergeben sich aus der nachfolgenden Beschreibung eines in der Bezeichnung dargestellten und weiterer nicht dargestellter Ausführungsbeispiele. Dabei bilden alle beschriebenen und/oder bildlich dargestellten Merkmale für sich oder in beliebiger sinnvoller Kombination den Gegenstand der Erfindung, auch unabhängig von ihrer Zusammenfassung in den Ansprüchen oder deren Rückbeziehung.

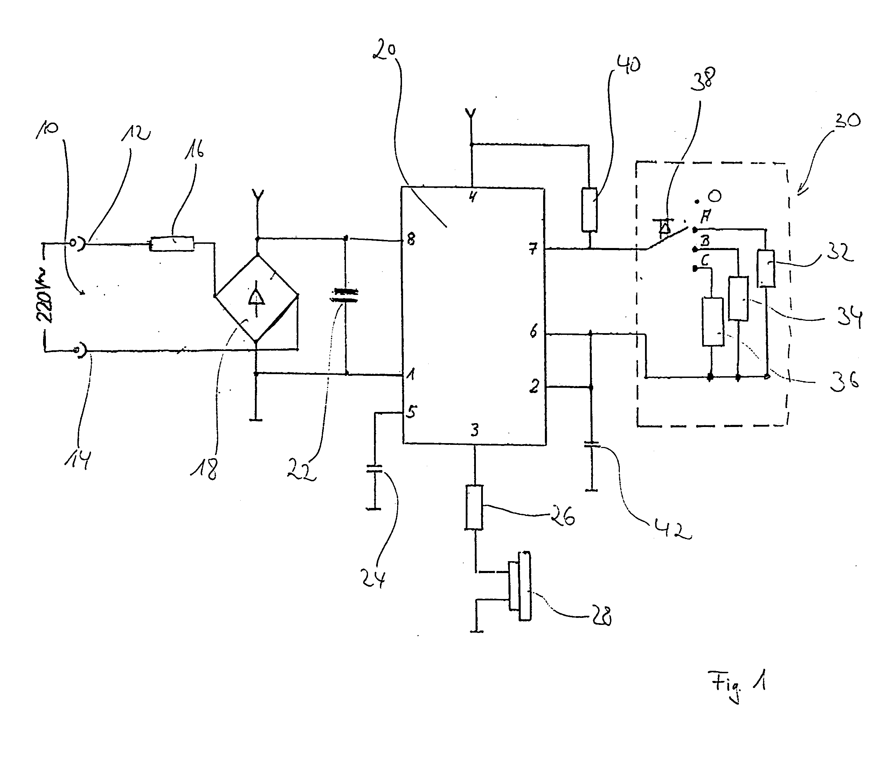

Die einzige Figur zeigt eine Schaltung einer erfindungsgemäßen Vorrichtung in schematischer Darstellung.

Die in der Zeichnung dargestellte erfindungsgemäße Vorrichtung zum Fernhalten und Vertreiben von Tieren und Insekten weist einen mit 10 bezeichneten Stecker mit Steckerpolen 12 und 14 zum Einstecken in eine an das öffentliche Netz angeschlossene Steckdose mit 220 Volt auf. Dem einen Steckerpol 12 ist ein Widerstand 16 in Reihe nachgeschaltet. Beide Steckerpole 12, 14 sind mit einem Gleichrichter 18 verbunden. Der Gleichrichter sorgt für etwa 5 Volt Gleichspannung. Ausgangsseitig ist der Gleichrichter 18 mit einem Oszillator 20 verbunden. Dieser weist im dargestellten Ausführungsbeispiel die Anschlüsse 1 bis 8 auf, wobei der Gleichrichter an den Anschlüssen 1 und 8 liegt. Zwischen Gleichrichter 18 und Oszillator 20 (Anschlüsse 1 und 8) befindet sich ein parallel geschalteter Kondensator 22 mit einer Kapazität von 22 µF (die Stärke des Widerstandes 16 beträgt 47 kΩ).

Am Anschluß 5 des Oszillators liegt eine Kondensator 24 mit einer Kapazität von 10 nF, während am Anschluß 3 ein als Piezo-Lautsprecher 28 ausgebildeter Lautsprecher mit vorgeschaltetem Widerstand 26 mit 47 kΩ liegt.

An den Anschlüssen 6 und 7 des Oszillators 20 liegt die erfindungsgemäße Widerstandsschaltung 30. Diese Schaltung weist vier Stellungen auf, die mit 0, A, B und C bezeichnet sind. Während die Null-Stellung einen unendlich großen Widerstand darstellt und das Gerät ausschaltet, sind in den Stellungen A, B und C drei Widerstände 32, 34, 36 parallel geschaltet, wobei der der Stellung A zugeordnete Widerstand 32 etwa 7,5 kΩ, der der Stellung B zugeordnete Widerstand 34 etwa 5,6 kΩ und der Widerstand 36 der Stellung C etwa 4,7 kΩ aufweisen. Die Stellungen 0, A, B und C sind über einen Schalter 38 einstellbar.

Schließlich ist die Schaltung der erfindungsgemäßen Vorrichtung mit einem weiteren Widerstand 40 mit 1 kΩ, der zwischen den Anschlüssen 4 und 7 des Oszillators 20 liegt und einem weiteren Kondensator 42 mit 10 nF, der an den Anschlüssen 2 und 6 des Oszillators 20 liegt, versehen.

In der Stellung A wird bei der dargestellten Vorrichtung über den Piezo-Lautsprecher 22 ein Ton mit einer Frequenz von etwa 7 kHz, in der Stellung B ein Ton mit etwa 10 kHz und in der Stellung C ein Ton mit der Frequenz von etwa 12 kHz erzeugt.

Bei einer zeichnerisch nicht dargestellten erfindungsgemäßen Vorrichtung weist die Widerstandsschaltung für den elektrischen Schallerzeuger einen stufenlos einstellbaren Widerstand auf. Hierbei kann beispielsweise von dem Gesamtwiderstand wahlweise ein entsprechender Teilwiderstand zur Erzeugung einer gewünschten Frequenz abgegriffen werden. Auch hierbei ist das Gerät über die Null-Stellung auszustellen.

In einem anderen, nicht dargestellten Ausführungsbeispiel weist die erfindungsgemäße Vorrichtung einen Zeitgeber auf. Dieser ist mit dem Oszillator 20 verbunden und so eingestellt, daß dieser eine Zeitlang mit Gleichspannung versorgt wird, während die Spannungsversorgung während eines Pausenintervalls unterbrochen wird.

Schließlich kann die erfindungsgemäße Vorrichtung auch eine Schaltung zur Erzeugung eines ab- und anschwellenden Schallsignals aufweisen. Hierbei geht eine zu Beginn der Schwingungskurve vorherrschende Frequenz allmählich und kontinuierlich in eine darüber bzw. darunterliegende Frequenz über. Dieser Übergang von der höheren zu niedrigeren und dann wieder von dieser zur höheren Frequenz erfolgt vorzugsweise in einem sehr schnellen Rhythmus, wobei eine Phase z. B. zwei Sekunden dauern kann. Gleichzeitig kann auch die Höhe des Impulses rhythmisch bzw. in Abhängigkeit von der momentanen Frequenz zu variieren sein.

Die gesamte Schaltung der erfindungsgemäßen Vorrichtung ist in einem zweiteiligen Kunststoffgehäuse untergebracht, wobei die einzelnen Elemente der Schaltung in einem Gehäusegrundkörper auf einer Platine befestigt sind. Der Gehäusegrundkörper kann über eine Gehäusedeckplatte verschlossen werden. Hierzu ist zwischen Gehäusegrundkörper und Gehäusedeckplatte eine Rastverbindung vorgesehen. Am Gehäuse, das aus herstellungstechnischen Gründen zweckmäßigerweise aus Kunststoff besteht, ist der Stecker 10 zum Anschluß an ein öffentliches Stromnetz ausgebildet. Der Stecker 10 geht direkt, d. h. kabelfrei, in das Gehäuse über.

## Patentansprüche

1. Vorrichtung zum Fernhalten und Vertreiben von Tieren, insbesondere Kleintieren, und Insekten mit einem elektrischen Schallerzeuger **gekennzeichnet durch** eine Widerstandsschaltung für den elektrischen Schallerzeuger mit einem stufenlos einstellbaren Widerstand.

2. Vorrichtung zum Fernhalten und Vertreiben von Tieren, insbesondere Kleintieren, und Insekten mit einem elektrischen Schallerzeuger **gekennzeichnet durch** eine Widerstandsschaltung (30) für den elektrischen Schallerzeuger mit wenigstens zwei wahlweise einstellbaren Widerständen (34, 36).

3. Vorrichtung nach Anspruch 2, **dadurch gekennzeichnet**, daß die Widerstandsschaltung (30) drei wahlweise einstellbare Widerstände (32, 34, 36) aufweist, mit denen ein Frequenzbereich des elektrischen Schallerzeugers von etwa 7, 10 und 12 kHz einstellbar ist.

4. Vorrichtung nach einem der Ansprüche 1 bis 3, **dadurch gekennzeichnet**, daß die Widerstandsschaltung (30) eine Nullstellung mit unendlich großem Widerstand aufweist.

5. Vorrichtung nach einem der Ansprüche 1 bis 4, **gekennzeichnet durch** ein wenigstens zweiteilig ausgebildetes Gehäuse mit Gehäusegrundkörper und Gehäusedeckplatte, die über eine Rastverbindung lösbar befestigbar sind.

6. Vorrichtung nach Anspruch 5, **dadurch gekennzeichnet**, daß das Grundgehäuse aus Kunststoff besteht.

7. Vorrichtung nach Anspruch 5 oder 6, **dadurch gekennzeichnet**, daß am Gehäuse ein Stecker (10) zum Anschluß an ein Stromnetz, vorzugsweise ohne Kabel, ausgebildet ist.

8. Vorrichtung nach einem der Ansprüche 1 bis 7, **gekennzeichnet durch** eine Schaltung zur Erzeugung eines Schallsignals mit Pausenintervalen.

9. Vorrichtung nach einem der Ansprüche 1 bis 8, **gekennzeichnet durch** eine Schaltung zur Erzeugung eines ab- und anschwellenden Schallsignals.

Fig. 1

# Europäisches Patentamt

## EUROPÄISCHER RECHERCHENBERICHT

Nummer der Anmeldung

**EP 91 11 3824**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | ELEKTOR ELECTRONICS. Bd. 10, Nr. 7/8, CANTERBURY GB , JULI/ AUGUST 1984 Seite 775; 'SONIC DETERRENT FOR KEEPING NASTY RODENTS AT BAY'<br>– – – | 1-4 | A 01 M 29/02 |
| X | DE-A-3 504 272   (K. BEUTER ET AL.)<br>* Seite 8, Zeile 11 - Zeile 19 * * * Seite 9, Zeile 6 - Zeile 16; Abbildung 4 * * | 1,2,4 | |
| Y | | 3,5-9 | |
| | – – – | | |
| X | EP-A-0 101 059   (B &M LIZENGESELLSCHAFT MBH)<br>* Seite 9, Zeile 18 - Zeile 21; Abbildung 1 * * | 1,2 | |
| | – – – | | |
| X | EP-A-0 265 182   (PAL INTERNATIONAL LIMITED)<br>* Zusammenfassung; Abbildung * *<br>– – – | 1,2 | |
| Y,D | DE-U-9 001 151   (W. BEYER ET AL.)<br>* das ganze Dokument * *<br>– – – | 3,5-9 | |
| A,D | DE-U-9 001 153   (W. BEYER ET AL.)<br>* das ganze Dokument * *<br>– – – | 1,3 | |
| A | DE-U-8 909 065   (W. BEYER ET AL.)<br>* Abbildung 1 * *<br>– – – – – | 7 | **RECHERCHIERTE SACHGEBIETE (Int. Cl.5)**<br><br>A 01 M |

Der vorliegende Recherchenbericht wurde für alle Patentansprüche erstellt

| Recherchenort | Abschlußdatum der Recherche | Prüfer |
|---|---|---|
| Den Haag | 11 Dezember 91 | MARANGONI G. |